# EUROPEAN PATENT SPECIFICATION

(11) **EP 3 248 458 B1**
(45) Date of publication and mention of the grant of the patent: **07.06.2023**
(21) Application number: 17172206.9
(22) Date of filing: 22.05.2017
(51) Int. Cl.: A01K 1/00, A01K 1/02, A01K 5/02

(54) **MOBILE PIGGERY INSTALLATION**
MOBILE SCHWEINEZUCHTEINRICHTUNG
INSTALLATION DE PORCHERIE MOBILE

(30) Priority: 23.05.2016 DK BA201600064 U
(43) Date of publication of application: 29.11.2017
(73) Proprietor: Purple Farm ApS, 9700 Brønderslev (DK)
(72) Inventor: THOMSEN, Hans Henrik, 9700 Brønderslev (DK)
(74) Representative: Patrade A/S

(56) References cited:
- WO-A1-95/10179
- GB-A- 2 217 567
- US-A- 3 234 911

## Description

### Field of the Invention

The present invention relates to a mobile piggery installation for breeding pigs.

### Background of the Invention

For many years, pigs have been bred to produce pork for the consumer market. Big industries have handled the production as a mass production. Today the production is an assembly line of pigs, and is primary based on efficiency and large scale solutions. The pigs are kept in large piggeries, where the pigs do not live a natural life. The pigs easily suffer from stress, diseases, and behavioral problems such as aggressions, apathy, tail biting, frustration etc. This affects quality taste of the pork.

At the same time, the consumer market is focused on welfare of animals in the agricultural sector. The consumer demand for sustainable production and organic products are increasing. To meet consumer demand, some production facilities are directed towards the natural behavior of pigs, by breeding pigs in free areas, also called "free range pigs". The free range pigs are moving around in an open area with access to shelters dispersed in a forest or in a field. This also affects the quality and the texture of the pork by the pork becoming more chewy and with far too little fat, or possibly too much fat, for pork, depending on weather conditions and time of the year, that is, cold or warm weather conditions or during a warm season or a cold season of the year. In the countryside, small farming houses may be used as small scale production of pork. However, the small farming houses can only accommodate a small number of pigs, often kept in combination with a small pen with an enclosure. The small farming houses and the small pen with enclosure limit the pig in having a natural foraging area. Due to the pigs rooting instinct, within a short time the pig will have rooted the soil, when the enclosure is small. Also, lack of exercise, because of the enclosure being small, affects the quality and the texture of the pork by the pigs becoming too fat.

US1875433A discloses a house, a shelter and a pen of knock-down construction comprising a unitary honoring member and framework providing a combination hog shelter house and pen in communication with each other and utilizing the top of a flooring member as a common indoor surface for the shelter house and pen. The house, shelter and pen of US1875433A is housing only a few pigs, and far from a fully operational piggery, that supplies the primary natural needs for the pigs. Also the enclosure is very small, preventing the pigs getting exercise needed for not becoming too fat.

US3234911 discloses an animal feed pen including an exercise area and a feeding area. The pen includes a slatted floor supported by frame members and held in raised position by adjustable legs. The pen is portable and is supported on skids or runners. A fence surrounds the exercise area, and a gate can be used as an entrance ramp. The feeding area is enclosed by a housing having a slanted front wall, a roof and side walls. The exercise area and the feeding area are reversed in position relative to the feeding area. The enclosure may have windows or vents providing ventilation. Adjacent to the entrance ramp there is a urine trap, which is positioned above a chamber pot which will collect the manure. The enclosure is very small, preventing the pigs getting exercise needed for not becoming too fat and getting aggressive when farrowing. Especially if there is more than one pig in the enclosure. The pen is not supporting the pig or pigs natural behavior and this leads to stress and diseases.

GB2217567-A and WO9510179-A both relate to outdoor pig raising enclosures.

### Object of the Invention

The object of the inventions is a mobile piggery installation, which optimizes quality, taste and texture of pork for production purpose, and which provides a fully operational piggery supporting the primary natural needs and instincts of the pigs, and thereby providing the pigs natural surroundings, supporting the natural behavior of the pigs, by giving the pigs a natural foraging environment, both indoor and outdoor.

### Description of the Invention

The present invention addresses the object by providing a mobile piggery installation comprising a piggery and an enclosure where the pigs are kept in the piggery installation, also during relocation of the piggery installation, and where the piggery, the enclosure and the pigs can be moved at the same time. The welfare principle of the pig in the piggery installation is maintaining good feeding, good housing, good health and appropriate behavior.

Problems such as fear, distress, frustration or apathy are prevented. The pigs are able to express natural, non-harmful, social and individual behaviors. Some of the advantages, when using the piggery installation, are well-being of the pigs, low rate of diseases, less but adequate fat on the pigs, and a very high survival rate, especially of the piglets. A well-known problem is medication used for the animals having unwanted issues, especially antibiotic immunity and resistant bacteria. It is therefore important to keep a high hygienic level and make sure that the environment does not condition bacterial growth.

The object of the invention is obtained by a piggery installation for breeding a plurality of pigs according to claim 1, and a method of moving the installation according to claim 10.

The invention provides a piggery installation for breeding of pigs for production of pork. The piggery installation benefits animal welfare by allowing the pigs direct to access outdoor field and not only piggeries being large barns with no outdoors facilities. The piggery installation is designed to enable pigs to carry out natural behavior within a healthy environment, even though they are raised in a piggery, and not raised as free range pigs.

The piggery installation is mobile and can be moved from one location in a field to another location in the field. The piggery installation can be moved by machinery external to the piggery such as a tractor driven by a farmer, or the piggery can be moved automatically by internal machinery of the piggery, possibly controlled by remote control. The mobile piggery installation consists of both a covered piggery with a dry floors and an outdoor enclosure, where e.g. foraging takes place. Consequently, the field will automatically be fertilized by the pigs, when the pigs are outside in the enclosure.

The piggery installation provides each pig adequate access to feed, both inside the piggery and outside in the enclosure. Especially outside in the enclosure, the feed is provided in such way that it encourage the pigs' natural behavior of foraging. Poor access to feed produces uneven growth and condition impairs feed conversion efficiency and increases the proportion of downgraded pigs. The feed can be adjusted continuously in a way, so that the composition of the feed fits what the animals consume in the field, and in this way pollution and wasted feed is minimized.

In a possible embodiment of the invention, the piggery installation has a tarp roof, attached to walls of the piggery with one or more of the following means of attachment: clips, clampings, hooks and/or latches.

It is preferable that the weight of the piggery installation is reduced as much as possible due to the need for mobility. One way of weight reduction is to reduce the weight of the roof construction, by using a tarp roof or a plate-like sandwich element.

Reduction of weight is relevant during transportation of the piggery installation, both when moving the piggery installation to a new field, and when replacing the piggery installation to another location of an existing field. By using a tarp roof, which has a lower mass than conventional fixed roofs like roofs of metal, clay of cement compositions, the piggery installation will be easier to move, due to the reduced weight of the piggery.

When moving the piggery installation to a new field, the piggery installation needs to be packed up. Using a tarp roof also makes it easier to pack up the piggery and to set up the piggery, reducing time and costs.

In a further advantageous embodiment of the invention, the piggery installation has a floor with natural ventilated flow through a plurality of ventilation apertures, at least one first ventilation aperture for flow of air into the piggery and at least one second ventilation aperture for flow of air out of the piggery, the at least one first aperture provided in a floor or at a bottom of a wall or at a top in a wall of the piggery, and the at last one second aperture provided at a top of a wall or in the roof of the piggery. The pig's area inside the piggery must be kept dry and warm. This will ensure the optimal health condition for the pig's well-being, thus also preventing diseases in spreading. Due to the gases, coming from the pig's feces, and other odors, a ventilation in the piggery is important. Since the gases and other odors come from the floor area, the at least one first aperture is provided in the floor or in the walls of the piggery.

To ensure a flow of air through the piggery, one or more ventilation aperture can be placed in upper parts of the walls or in the roof of the piggery. The ventilation apertures will then add to a natural flow of air through the piggery, from the floor and/or lower parts of the walls towards the roof and/or the upper parts of the walls.

The pig feces and the like can filter out through apertures in the floor and may be used as manure, and thereby directly fertilize the field underneath the piggery.

In a still further advantageous embodiment of the invention, the walls of the piggery are insulated for keeping up a temperature inside the piggery during use.

In a central part of a herd of pigs inside the piggery, the temperature will be relatively high, but at an outer part of the herd of pigs inside the piggery, along the walls of the piggery, the temperature can be relatively low. The pigs will tend to shift position, from the outer part of the herd of pigs to the central part of the herd of pigs, to keep warm. Piglets will often be pushed towards, or left at, the outer part of the herd of pigs, when the pigs are resting. If the piglets are allowed at the central part of the herd of pigs, this may harm the piglets, because the piglets may be squeezed severely. If the piglets cannot keep warm, a high rate of mortality of the piglets will occur. If the walls of the piggery are insulated, it will help the piglets keeping warm, even along the walls, and therefore the mortality rate of piglets will be reduced or even eliminated. When the temperature in the entire piggery is the same, it is indifferent where the piglets are lying in order to survive. Efficiency in bringing up the pigs is the same, non-dependent on the time of year as no extra food is needed during winter time to keep the pigs warm. The temperature in the entire piggery is the same along the entire piggery and the temperature is appropriate for bringing up pigs, during the entire year.

In a further advantageous embodiment of the invention, the piggery installation has foldable walls, back wall and front wall, and where the walls, back wall and the front wall are foldable in the transition between the floor and the walls, back wall and a front and/or partly foldable walls, back wall and front wall.

During transportation on road, when relocating the piggery installation to another field, the piggery installation must be reduced in size, to be able to be transported as easily and economically as possible. Therefore it is an advantage that the piggery installation is foldable. This way transportation of the piggery installation will reduce time and costs of transporting the piggery installation to another field.

In a still further advantageous embodiment of the invention, where an electrical installation means comprises at least one solar panel supplying light, surveillance camera and sensors, computers and an electric generator supplying machinery, batteries and backup systems, where the solar panel and the generator are part of the piggery.

The energy for running the technical installations e.g. energy supply, controllable feeding systems and modern production surveillance comes from solar panels. The solar panels can be placed on the roof of the piggery, at walls of the piggery or possibly beside the piggery. The electric generator supplying machinery, batteries and backup systems can be placed inside or outside the piggery.

The use of camera and sensors in the piggery installation provides several benefits, e.g. disease control, reduction in costs, increase productivity etc. The surveillance camera can be mounted so the view of the camera is covering most of the inside of the piggery and/or most of the enclosure. The sensors can be placed inside the piggery and or outside the enclosure. The sensors can be attached each pig monitoring the daily activities. The pigs can be monitored on the location or from a remote location. The monitoring by camera and sensors can be wireless means.

In a further advantageous embodiment of the invention, the enclosure attached to the piggery at the rear wall of the piggery is provided with one or more enclosure elements having a serrated or a toothed lower edge abutting the ground, and where the serrated or toothed lower edge of the at least one enclosure element, when the piggery installation is displaced from one location in a field to another location in the field, extend into the ground and provide a harrowing of the soil of the one location in the field, where the pigs have been active during the position of piggery installation in the one location in the field.

Because the pigs have a natural instinct for rooting in the ground, the farmers can use the behavior to their advantage. At the same time as the pigs are rooting in the ground, the field gets plowed, by using an organic plowing process, and at the same time the field is fertilized. The environmental advantages are also that the pastures are cropped directly on site, and there is no need for cutting the grass and transporting the grass to the stables. No tractor is needed for distributing the pig's manure to the field, since the manure is deposited by the pigs right where the manure is needed. The piggery installation according to the invention is better suited for fulfilling demands of organic farming. Because the piggery is moveable, pollution of certain areas is avoided, which is a well-known problem when discussing traditional outdoor production of pigs. At the rear end of the enclosure, part of an enclosure element is provided with a harrow or similar ground engaging equipment, with the purpose of levelling out and forcing the manure into the ground to minimize the pollution.

In a still further advantageous embodiment of the invention, where the flooring, the walls, the rear wall and the front wall of the piggery are manufactured from the one or more of the following materials: steel, wood and any kind of polymer based material, and where the enclosure is manufactured from one or more of the flowing materials: steel, wood and any kind of polymer based material that which holds a heavy load in use when moving and plowing the ground.

The material of the piggery installation is chosen in a combination of weight and durability. The material must be as light as possible, but at the same time be as durable and robust as possible, due to the load from the pigs, as well as being durable enough for the piggery installation to be moved.

The invention also provides a possible aspect of moving a piggery installation, where the piggery is moved by externals moving means such as a tractor pulling the piggery or by internal moving means such as a motor driving the wheels or the belt, and where the enclosure is displaced because of being attached to the piggery, so that the enclosure is displaced by being pulled by the piggery, where the enclosure comprises a number of enclosure elements, where the enclosure elements while pulling the piggery installation element, are leveling the pig-plowed field, now ready for new feed to growth, when moving the piggery installation when the piggery installation is in process of breeding the pigs, where the pigs arriving within the piggery installation to a new area in the field where the pigs is ready to root the new soil.

Both the piggery and outdoor areas have the technical constructions; so that they are equipped with transportation means, such as wheels and/or belts in order for the piggery installation to drive or dragged over the fields. The piggery installation has the advantage that the pigs are supported with new field area, when needed. The pigs' natural foraging method is rooting the soil, thereby plowing the field. The soil will automatically be fertilized during the period the pigs are on the field area. When the field area is plowed to the limit of what the pigs can muddle through, then it is time to move the piggery installation to a new field area, and leaving the used area. After the piggery installation has been moved, the plowed field must be reestablished, by growing new grass or other sorts of feed needed in the production. The sowing, seeding or planting of the wanted field crops, can be executed at the same time as the piggery installation is moved.

The invention also provides a further possible aspect of moving a piggery installation, when the piggery installation is not in process of breeding the pigs, the piggery is disassembled by removing the roof and outer installation, and parts of the inner installations, where the walls can be released from one another into wall modules, and folded to the floor in a predefine pattern, where the some of the installations remains in the piggery during transport, and where after the enclosure elements are stacked on the folded piggery, where after the piggery installation are ready to be transported to a new location by a transporting facility and when arriving to the new field location, will be reassembled and ready to breed pigs or being stored until further use.

A situation can occur, where the piggery installation has to move from a field to another field or from the production factory to a field or from a field to a storage room. Moving the piggery installation on the roads needs special action, since the dimension of the piggery installation is too large to be transported by normal transporting means. The piggery is therefore foldable in an acceptable degree, making it possible for transportation on public roads by transporting means capable for large shipments.

### Description of the Drawing

Fig. 1 shows a piggery installation, incl. a piggery and an enclosure.
Fig. 2 shows the piggery installation in use from a top view
Fig. 3 shows the pigs in a foraging situation.
Fig. 4 shows the piggery installation after has harrowed the soil.
Fig. 5 shows the interior of a piggery installation.
Fig. 6 shows an example on construction and arrangement of the interior.

### Detailed Description of the Invention

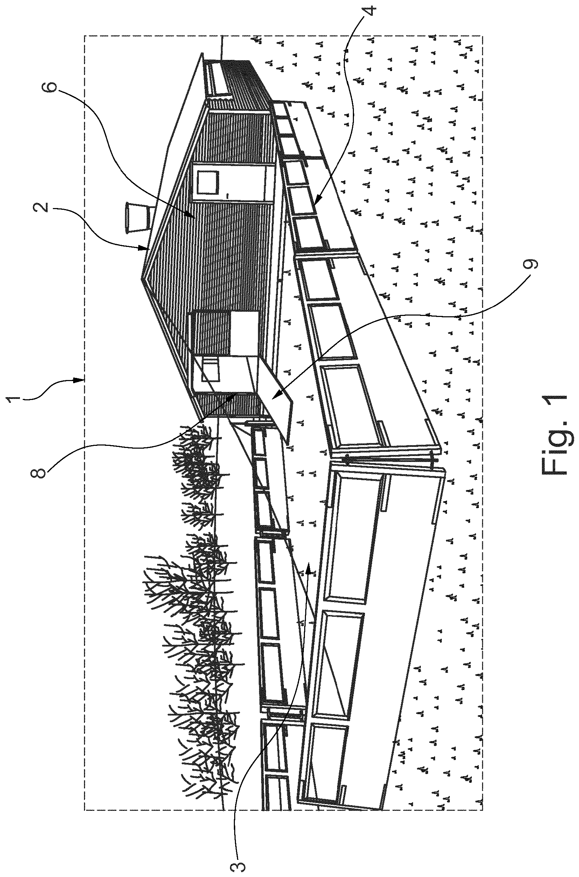

Fig. 1 shows a piggery installation 1 comprising a piggery 2 and an enclosure 3. The entire piggery installation 1 is moveable, also when the piggery installation is in use, that is, when pigs are in the piggery installation 1, either in the piggery 2 or in the enclosure. The piggery installation 1 is prepared for a large number of pigs, and the piggery installation 1 is very suitable for pigs intended for pork production.

The use of the piggery installation 1 is as follows; the pigs will root within the enclosure in an area of the field, on which the piggery installation 1 is placed. After the pigs have been rooting the area of the field, the soil in the field area has been rooted. The pigs now need a new place to root, and the piggery installation 1 is moved to a new area of the field, so the pigs can use the natural instinct when foraging and thereby rooting the soil.

The piggery 2 has an aperture 8 in the rear end 6, which aperture 8 leads the pigs from the piggery 2 to the enclosure 3, and vice versa, along a slope 9. The enclosure 3 consists of several enclosure elements 4. The size of the enclosure 3 depends on the number of pigs intended for the piggery installation 1. If the enclosure 3 is too large, the pigs will get too much exercise, and the pork become too chewy, which is not preferable as a consumer product. If the enclosure 3 is too small, the pigs will be stressed, which can lead to behavioral disturbances and diseases. So the enclosure 3 much be scaled according to the number of pigs in the piggery installation 1.

An example of the size of an enclosure of the piggery installation 1, as shown in fig. 1, the enclosure 3 is 120 m² estimated for approximately 150 pigs. Another example may be a piggery installation with an enclosure 3 of 150 m² or even an enclosure 3 of 200 m² for 150 pigs. A preferred size of the enclosure 3 is between 1 m² and 2 m² per pig. If a piggery installation is too small and therefore have too few pigs, the piggery installation 1 as a production facility will not be economically profitable. Therefore, small piggeries comprising enclosures is not considered a production unit for breeding pigs for pork production. Additionally, if the enclosure 3 has a certain minimum dimension depending on the number of pigs, the need for moving the piggery during the day may be limited, possibly limited from moving 3 times a day to moving 2 times a day, in order for the pigs to get access to a new part of the field for foraging.

The size of the piggery is of importance. If the piggery 2, preferably, is not too large compared to the estimated numbers of pigs in the piggery installation 1, the pigs will refrain from leaving their feces in the piggery 2, but instead the pigs will go outdoor and leave their feces in certain areas of the enclosure 3. Such behavior of the pigs is preferred, so that feces primarily are left in the enclosure 3.The size of the enclosure 3 can easily be changed, if needed, by adding or removing a number of enclosure elements 4.

Underneath the piggery 2, a number of tracks (not shown) are provided. The large surface area of the tracks distributes the weight of the piggery 2 better than wheels. The tracks enable a continuous tracked vehicle to traverse soft ground with less likelihood of becoming stuck in the field.

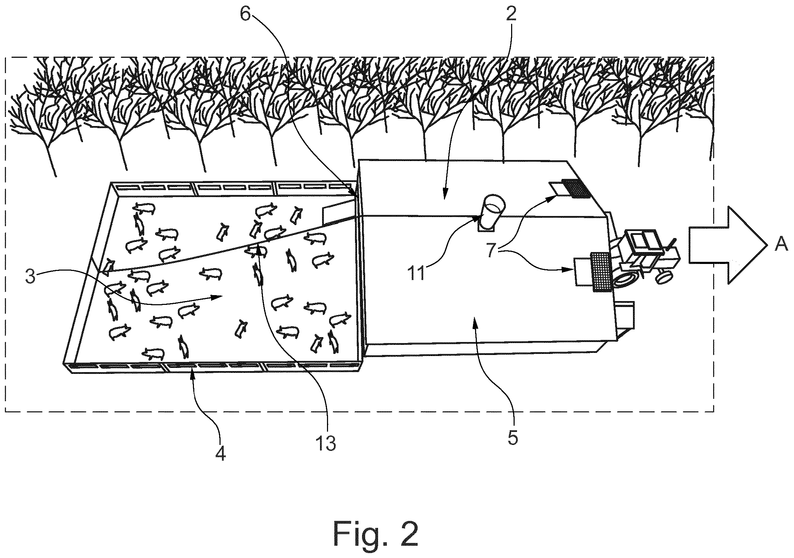

Fig. 2 shows the piggery installation 1 in use, from a top view. The piggery installation is intended for being moved in a moving direction A dragged by moving means, in this case a tractor, to another location on the field. The tractor is connected to the piggery 2 by connecting means (not shown). On a tarp roof 5 of the piggery 2, solar panels 7 are placed. A ventilation means 11 is located on top of the tarp roof 5. The enclosure 3 consists of eight enclosure element 4. Two enclosure elements at the rear of the enclosure 3 are provided with ground-engaging teeth (not shown) and used as a harrow, when moving the piggery installation 1. The purpose of the two enclosure elements 4 at the rear of the enclosure 3 is to distribute the mixture of soil and manure, forcing the mixture into the ground. A wire or rope 10 extends from the piggery 2 to the two enclosure elements 4 at the rear of the enclosure, ensuring the load of the enclosure element 4 is transferred to a frame of the piggery, when dragged along the field. After moving the piggery installation along the newly rooted area of the field, the area of field is now ready for new grass to grow and an area of the field, where the enclosure now is located, after having been moved by the tractor, is now ready for the pigs to root.

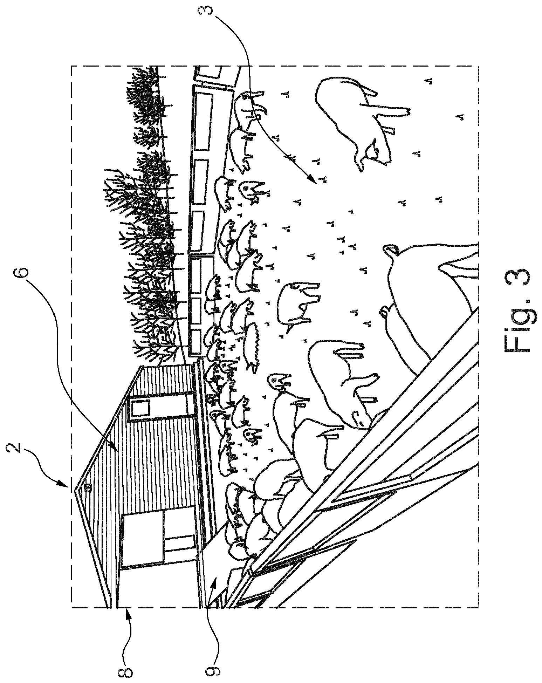

Fig. 3 shows the pigs foraging inside the enclosure 3. The purpose of the piggery installation 1 is to provide the pigs natural surroundings, which supports a natural behavior of the pigs. The piggery 2 provides a both dry and warm indoor area for the pigs. Through the aperture 8 at the rear end 6 of the piggery 2, the pigs can chose to go in or out of the piggery 2 using the slope 9. Outdoor conditions within the enclosure 3, exercise and rooting are available, and which are natural foraging for a pig. The pigs natural foraging is digging up worms from the soil, and thereby plowing the fields. Supplements of food can be scattered on the field inside the enclosure 3, to stimulate the foraging instinct. By giving the pigs a natural foraging environment, they will be naturally stimulated, and therefore being less stressed. This reduces behavioral problems as tail bites and illness etc., decreases the need for medication of the pigs and enhances the texture and taste of the pork.

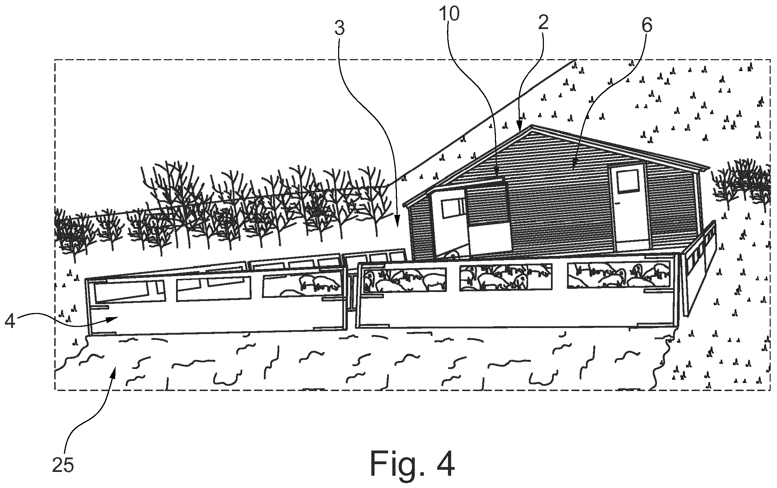

Fig. 4 shows the piggery installation 1 after having been moved along the field. The piggery installation 1 has been moved to a neighboring area of the field, leaving an area of harrowed soil 25. The two enclosure elements 4 at the rear end of the enclosure 3 have been supported, during movement along the field, by a wire or rope 10 connected to the rear end 6 of the piggery 2. The bottom part of the two enclosure elements 4 at the rear of the enclosure 3, is provided with ground-engaging teeth. Alternatively a harrow can be mounted to the enclosure elements 4.

When the piggery installation 1 has been moved, the field must be reestablished, by growing new grass or other sorts of crop needed in the field. The sowing, seeding or planting of the wanted field crops, can be executed at the same time as the piggery installation is moved, and the soil is harrowed. A sowing machine and/or seed drills can be added to the two enclosure elements 4 at the back of the enclosure 3, depending on the type of seed chosen. So the harrowing and the seeding can be done at the same time as moving the piggery installation 1, reducing manpower and thereby saving costs.

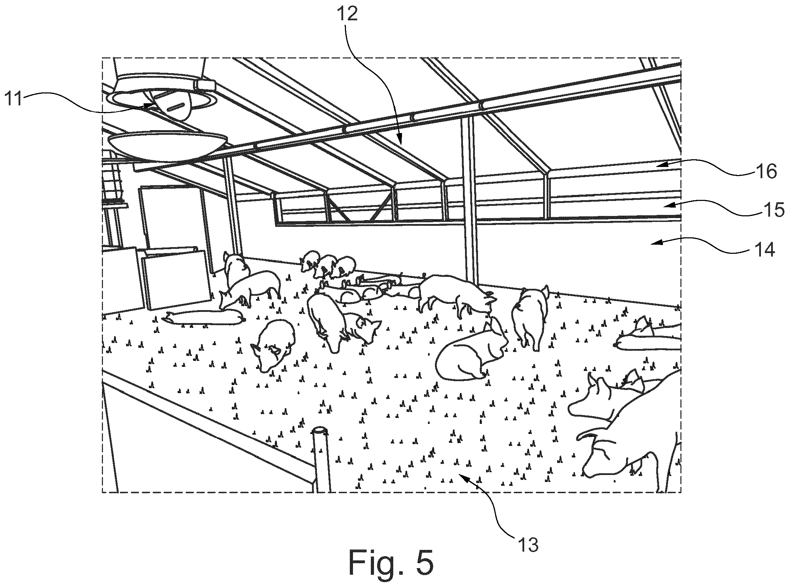

Fig. 5 shows an interior 12 of the piggery 2 of the piggery installation 1. The interior 12 inside the piggery 2 contains a pigs nesting area 13. A ventilation means 11 is mounted in an aperture in the roof. The side wall 14 contains ventilation windows 15, which can be opened or closed, possibly and preferably automatically. The curtains 16 can be rolled upwards and downwards. The curtains are used for adjusting the temperature inside the piggery 2. The curtains 16 may also be used for shading the sun, thereby preventing the interior 12 getting too warm. The curtain 16 may also be used for minimizing the ingress of insects and other bugs in the interior 12.

When monitoring and measuring welfare of the pigs, using sensors and cameras inside the piggery 2 and outside, within the enclosure 3, different factors may be taken into consideration, e.g. eat and drink habits, moving habits, weight, height, length, heartbeat, breathing etc. Also the ambient conditions are taken into consideration, e.g. temperature, humidity, gases etc.

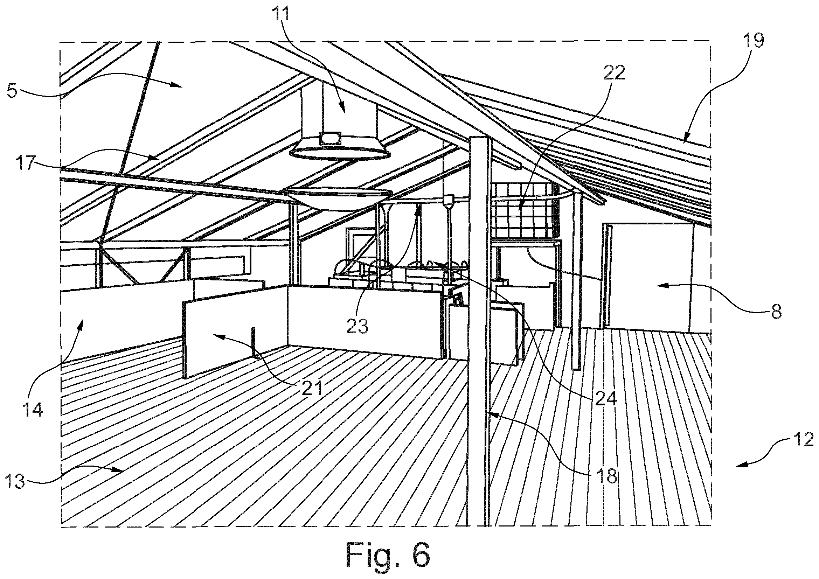

Fig. 6 shows an example on construction and arrangement of the interior 12 of the piggery 2. A roof construction 17 including posts 18, purlins and/or rafters 19, and made from steel or wood, supports the tarp roof 5, e.g. using. The ventilation means 11, e.g. a chimney, is mounted in an aperture in the roof

The side walls 14 are made of a polymer material, keeping the weight of the piggery 2 down. The side walls 14 are insulated. The interior 12 are divided into different areas using partitions 21, such as divided into a nesting area 13 and a service area 24 etc. At the rear end of the interior 12, the aperture 8 is open, and the pigs have access to the enclosure outside.

At the service area 24, a container for drinking water 22 are located, for supplying the pigs with drinking water. In the service area 24, rechargeable batteries or ordinary batteries, a control system, a feeding container and distribution means for feed 23 etc. may be provided. The partitions 21 are easily moved in order to change the size of the different areas inside the interior 12. E.g. the size of the nesting area 13 is dependent on the number of pigs in the installation. Also, it must be easy to remove the partitions, when cleaning the piggery 2, and thereby maintaining a high hygienic level. The floor in the interior 12 has diffusion apertures for discharge of urine. The discharge apertures may be spacing between floor planks or may a grating constituting the floor. The piggery 2 consists of a set middle construction with sides, which can be folded up, allowing the piggery installation to be transported on road. To be able to transport the piggery installation 1, a tow bar (not shown) is attached at one end, so as to move the piggery installation 1 via a wheel or caterpillar track on steel beds is possible.

## Claims

1. A piggery installation (1) for breeding pigs, the piggery installation (1) comprising a piggery (2), and where the piggery (2) is provided with transport means for supporting the piggery (2) at a location in a field and during a movement of the piggery installation (1), such that the piggery installation (1) is capable of being transported from one location of the piggery installation (1) in the field to another location of the piggery installation (1) in the field, and where the piggery installation (1) comprises an outdoor enclosure (3) attached to the piggery (2) at a rear end of piggery (2), where only the piggery (2) has a floor (13), walls (14) and a roof (5), and where the piggery (2) has an aperture (8) in the rear wall (14),
**characterised in that** the transport means is wheels or belts placed on the sides of or below the piggery (2) and/or tracks placed on the sides of or below the piggery (2), the enclosure (3) comprises a number of enclosure elements (4) capable of enclosing an area of the field provided for natural foraging when the pigs rooting the soil, and where the piggery (2) has a slope leading from the piggery to the enclosure, where the pigs during use of the piggery installation (1) can pass from the piggery (2) to the enclosure (3), and from the enclosure (3) to the piggery (2), along the slope (9) and through the aperture (8) in the rear wall (14) of the piggery (2), wherein the enclosure (3) comprises a number of transverse extending enclosure elements (4) extending transverse to a direction of movement of the piggery installation (1), and configured for levelling out the area of field having been rooted by the pigs when the enclosure is pulled by the piggery, and where the piggery installation (1) comprises storage containers for feed and liquid, and distribution means for distributing feed and liquid inside the piggery (2), and the piggery installation (1) comprising at least one of the following electricity generating means: solar panels, motorised electric power generator or a battery, for generating electric power to a plurality of electric power consuming equipment such as the feed and liquid distributing means and lighting, and where the electric power consuming equipment is provided as an integrate part of the piggery installation (1).

2. A piggery installation (1) according to claim 1, wherein the piggery (2) has a tarp roof (5), attachable to and detachable from walls (14) of the piggery (2) and with one or more of the following means of attachment: clips, clamps, hooks and/or latches.

3. A piggery installation (1) according to claim 1, where the piggery has a plate-like roof (5), preferably a sandwich-like insulated roof (5), and where the piggery (2) together with the roof (2) is dividable into at least two separate individual sections along a vertical plane, preferably extending from a front end to a rear end of the piggery (2).

4. A piggery installation (1) according to claim 1 or 2, wherein the piggery (2) has at least two ventilation apertures, at least one first ventilation aperture for flow of air into the piggery (2) and at least one second ventilation aperture for flow of air out of the piggery (2), the at least one first aperture provided in a floor or at a bottom of a wall (14) or at a top of a wall (14) of the piggery (2), and the at last one second aperture provided at a top of a wall (14) or in the roof (5) of the piggery (2).

5. A piggery installation (1) according to any of the preceding claims, where the walls (14) of the piggery (2) are insulated for maintaining a certain temperature inside the piggery (2) during use, preferably only by heat emitted by pigs in the piggery (2).

6. A piggery installation (1) according to any of the preceding claims, where the piggery (2) has foldable walls (14) foldable along a transition between the floor and the walls (14), possibly also foldable along a hinge along an extension of the walls (14).

7. A piggery installation (1) according to any of the preceding claims, wherein the electricity generating means comprises at least one solar panel (7) and/or at least one battery for supplying electric power for one or more of the following equipment: light, sensors and computers and at least one electric power generator for supplying electric power for one or more of the following equipment: light, machinery or batteries

8. A piggery installation (1) according to any of the preceding claims, wherein the enclosure (3) is attached to the piggery (2) at a rear end of the piggery (2) and is provided with one or more enclosure elements (4) having a serrated or toothed lower edge engaging the ground of the field, and where the serrated or toothed lower edge of the at least one enclosure (3) element, when the piggery installation (1) is displaced from one location in a field to another location in the field, extend into the ground and provide a harrowing of the soil of the one location in the field, where the pigs have been active during the position of piggery installation (1) in the one location in the field.

9. A piggery installation (1) according any of the previous claims, wherein the floor (13) and the walls (14) of the piggery (2) are manufactured from a plate-like structure of the one or more of the following materials: steel, wood or a polymer based material, and where the enclosure (3) is manufactured from a lattice-shaped structure of one or more of the following materials: steel, wood or a polymer based material.

10. Method of moving a piggery installation (1) according to any of claims 1-9, **characterised in that** the piggery (2) is moved by external moving means such as a tractor pulling the piggery (2) and/or by internal moving means such as a motor driving the wheels or the belt, and where the enclosure (3) is displaced because of being attached to the piggery (2), where the enclosure (3) is displaced by being pulled by the piggery (2), where the enclosure (3) comprises a number of enclosure elements (4) extending transverse to a direction of movement of the piggery installation (1), and where the transverse extending enclosure elements (4), when the enclosure (3) is pulled by the piggery (2), are levelling out the area of field having been rooted by the pigs.

## Patentansprüche

1. Schweinezuchteinrichtung (1) zum Züchten von Schweinen, wobei die Schweinezuchteinrichtung (1) einen Schweinestall (2) umfasst und wobei der Schweinestall (2) mit Transportmitteln zum Stützen des Schweinestalls (2) an einem Ort auf einem Feld und während einer Bewegung der Schweinezuchteinrichtung (1) bereitgestellt ist, sodass die Schweinezuchteinrichtung (1) von einem Ort der Schweinezuchteinrichtung (1) auf dem Feld zu einem anderen Ort der Schweinezuchteinrichtung (1) auf dem Feld transportiert werden kann, und wobei die Schweinezuchteinrichtung (1) ein Freigehege (3) umfasst, das an einem hinteren Ende des Schweinestalls (2) an dem Schweinestall (2) angebracht ist, wobei nur der Schweinestall (2) eine Unterseite (13), Wände (14) und ein Dach (5) aufweist, und wobei der Schweinestall (2) eine Öffnung (8) in der Rückwand (14) aufweist,
**dadurch gekennzeichnet, dass** das Transportmittel Räder oder Riemen, die an den Seiten von oder unter dem Schweinestall (2) platziert sind, und/oder Schienen sind, die an den Seiten von oder unter dem Schweinestall (2) platziert sind, wobei das Gehege (3) eine Anzahl an Gehegeelementen (4) umfasst, die einen Bereich des Feldes einschließen kann, der für natürliche Nahrungssuche bereitgestellt ist, wenn die Schweine den Boden durchwühlen, und wobei der Schweinestall (2) ein Gefälle aufweist, das von dem Schweinestall zu dem Gehege führt, wobei die Schweine während der Verwendung der Schweinezuchteinrichtung (1) von dem Schweinestall (2) zu dem Gehege (3) und von dem Gehege (3) zu dem Schweinestall (2) entlang des Gefälles (9) und durch die Öffnung (8) in der Rückwand (14) des Schweinestalls (2) gelangen können, wobei das Gehege (3) eine Anzahl an sich quer erstreckenden Gehegeelementen (4) umfasst, die sich quer zu einer Bewegungsrichtung der Schweinezuchteinrichtung (1) erstrecken und konfiguriert sind, um die Feldfläche auszugleichen, die von den Schweinen durchwühlt worden ist, wenn das Gehege durch den Schweinestall gezogen wird,
und wobei die Schweinezuchteinrichtung (1) Lagerbehälter für Futter und Flüssigkeit und Verteilungsmittel zum Verteilen von Futter und Flüssigkeit innerhalb des Schweinestalls (2) umfasst und die Schweinezuchteinrichtung (1) mindestens eines der folgenden Elektrizitätserzeugungsmittel umfasst: Solarpaneele, motorisierter elektrischer Stromgenerator oder eine Batterie, um elektrischen Strom für eine Vielzahl von elektrischen Strom verbrauchenden Geräten wie Futter- und Flüssigkeitsverteilungsmitteln und Beleuchtung zu erzeugen, und wobei die elektrischen Strom verbrauchenden Geräte als integrierter Teil der Schweinezuchteinrichtung (1) bereitgestellt sind.

2. Schweinezuchteinrichtung (1) nach Anspruch 1, wobei der Schweinestall (2) ein Planendach (5) aufweist, das an Wänden (14) des Schweinestalls (2) anbringbar und davon lösbar ist, und mit einem oder mehreren der folgenden Anbringungsmittel: Klemmen, Klammern, Haken und/oder Riegeln.

3. Schweinezuchteinrichtung (1) nach Anspruch 1, wobei der Schweinestall ein plattenartiges Dach (5) aufweist, bevorzugt ein sandwichartiges isoliertes Dach (5), und wobei der Schweinestall (2) zusammen mit dem Dach (2) entlang einer vertikalen Ebene, die sich bevorzugt von einem vorderen Ende zu einem hinteren Ende des Schweinestalls (2) erstreckt, in mindestens zwei separate einzelne Abschnitte teilbar ist.

4. Schweinezuchteinrichtung (1) nach Anspruch 1 oder 2, wobei der Schweinestall (2) mindestens zwei Belüftungsöffnungen aufweist, mindestens eine erste Belüftungsöffnung zum Einströmen von Luft in den Schweinestall (2) und mindestens eine zweite Belüftungsöffnung zum Ausströmen von Luft aus dem Schweinestall (2), wobei die mindestens eine erste Öffnung in einer Unterseite oder an einem Boden einer Wand (14) oder an einer Oberseite einer Wand (14) des Schweinestalls (2) bereitgestellt ist und die mindestens eine zweite Öffnung an einer Oberseite einer Wand (14) oder in dem Dach (5) des Schweinestalls (2) bereitgestellt ist.

5. Schweinezuchteinrichtung (1) nach einem der vorhergehenden Ansprüche, wobei die Wände (14) des Schweinestalls (2) isoliert sind, um während der Verwendung eine bestimmte Temperatur innerhalb des Schweinestalls (2) aufrechtzuerhalten, bevorzugt nur durch Wärme, die durch Schweine in dem Schweinestall (2) abgegeben wird.

6. Schweinezuchteinrichtung (1) nach einem der vorhergehenden Ansprüche, wobei der Schweinestall (2) faltbare Wände (14) aufweist, die entlang eines Übergangs zwischen der Unterseite und den Wänden (14) faltbar sind, gegebenenfalls auch entlang eines Scharniers entlang einer Verlängerung der Wände (14) faltbar.

7. Schweinezuchteinrichtung (1) nach einem der vorhergehenden Ansprüche, wobei das Elektrizitätserzeugungsmittel mindestens ein Solarpaneel (7) und/oder mindestens eine Batterie zum Liefern von elektrischem Strom für eines oder mehrere der folgenden Geräte umfasst: Licht, Sensoren und Computer und mindestens einen elektrischen Stromgenerator zum Liefern von elektrischem Strom für eines oder mehrere der folgenden Geräte: Licht, Maschinen oder Batterien.

8. Schweinezuchteinrichtung (1) nach einem der vorhergehenden Ansprüche, wobei das Gehege (3) an dem Schweinestall (2) an einem hinteren Ende des Schweinestalls (2) angebracht ist und mit einem oder mehreren Elementen (4) des Geheges bereitgestellt ist, die eine gezackte oder gezahnte untere Kante aufweisen, die den Erdboden des Feldes in Eingriff nimmt, und wobei sich die gezackte oder gezahnte untere Kante des mindestens einen Elements des Geheges (3), wenn die Schweinezuchteinrichtung (1) von einem Ort auf einem Feld zu einem anderen Ort auf dem Feld verschoben wird, in den Erdboden erstreckt und ein Eggen des Erdbodens des einen Ortes auf dem Feld bereitstellt, an dem die Schweine während der Position der Schweinezuchteinrichtung (1) an dem einen Ort auf dem Feld aktiv gewesen sind.

9. Schweinezuchteinrichtung (1) nach einem der vorhergehenden Ansprüche, wobei die Unterseite (13) und die Wände (14) des Schweinestalls (2) aus einer plattenartigen Struktur aus einem oder mehreren der folgenden Materialien hergestellt sind: Stahl, Holz oder ein Material auf Polymerbasis, und wobei das Gehege (3) aus einer gitterförmigen Struktur aus einem oder mehreren der folgenden Materialien hergestellt ist: Stahl, Holz oder einem Material auf Polymerbasis.

10. Verfahren zum Bewegen einer Schweinezuchteinrichtung (1) nach einem der Ansprüche 1-9, **dadurch gekennzeichnet, dass** der Schweinestall (2) durch externe Bewegungsmittel wie einem Traktor, der den Schweinestall (2) zieht, und/oder durch interne Bewegungsmittel wie einem Motor, der die Räder oder den Riemen antreibt, bewegt wird, und wobei das Gehege (3) verschoben wird, weil es an dem Schweinestall (2) angebracht ist, wobei das Gehege (3) verschoben wird, indem es durch den Schweinestall (2) gezogen wird, wobei das Gehege (3) eine Anzahl an Gehegeelementen (4) umfasst, die sich quer zu einer Bewegungsrichtung der Schweinezuchteinrichtung (1) erstreckt, und wobei die sich quer erstreckenden Gehegeelemente (4), wenn das Gehege (3) durch den Schweinestall (2) gezogen wird, die Feldfläche ausgleichen, die von den Schweinen durchwühlt worden ist.

## Revendications

1. Installation de porcherie (1) pour l'élevage de porcs, l'installation de porcherie (1) comprenant une porcherie (2), et où la porcherie (2) est pourvue de moyens de transport pour supporter la porcherie (2) au niveau d'un emplacement dans un champ et lors d'un déplacement de l'installation de porcherie (1), de sorte que l'installation de porcherie (1) est capable d'être transportée d'un emplacement de l'installation de porcherie (1) dans le champ à un autre emplacement de l'installation de porcherie (1) dans le champ, et où l'installation de porcherie (1) comprend un enclos extérieur (3) fixé à la porcherie (2) au niveau d'une extrémité arrière de la porcherie (2), où seule la porcherie (2) a un plancher (13), des parois (14) et un toit (5), et où la porcherie (2) a une ouverture (8) dans la paroi arrière (14),
**caractérisée en ce que** les moyens de transport sont des roues ou des courroies placées sur les côtés ou en dessous de la porcherie (2) et/ou des rails placés sur les côtés ou en dessous de la porcherie (2), l'enclos (3) comprend un certain nombre d'éléments d'enclos (4) capables d'enfermer une zone du champ prévue pour le fourrage naturel lorsque les porcs s'enracinent dans le sol, et où la porcherie (2) a une pente menant de la porcherie à l'enclos, où les porcs lors de l'utilisation de l'installation de porcherie (1) peuvent passer de la porcherie (2) à l'enclos (3), et de l'enclos (3) à la porcherie (2), le long de la pente (9) et à travers l'ouverture (8) dans la paroi arrière (14) de la porcherie (2), dans laquelle l'enclos (3) comprend un certain nombre d'éléments d'enclos s'étendant transversalement (4) s'étendant transversalement à une direction de déplacement de l'installation de porcherie (1), et configurés pour niveler la zone de champ ayant été enracinée par les porcs lorsque l'enclos est tiré par la porcherie,
et où l'installation de porcherie (1) comprend des conteneurs de stockage pour des aliments et du liquide, et des moyens de distribution pour distribuer des aliments et du liquide à l'intérieur de la porcherie (2), et l'installation de porcherie (1) comprenant au moins l'un des moyens de génération d'électricité suivants : panneaux solaires, un générateur d'énergie électrique motorisé ou une batterie, pour générer de l'énergie électrique vers une pluralité d'équipements consommateurs d'énergie électrique tels que les moyens de distribution d'aliments et de liquide et l'éclairage, et où l'équipement consommateur d'énergie électrique est fourni comme partie intégrante de l'installation de porcherie (1).

2. Installation de porcherie (1) selon la revendication 1, dans laquelle la porcherie (2) a un toit en bâche (5), pouvant être attaché et détaché des parois (14) de la porcherie (2) et avec un ou plusieurs des moyens de fixation suivants : clips, pinces, crochets et/ou loquets.

3. Installation de porcherie (1) selon la revendication 1, où la porcherie a un toit en forme de plaque (5), de préférence un toit isolé en sandwich (5), et où la porcherie (2) avec le toit (2) est divisible en au moins deux sections individuelles séparées le long d'un plan vertical, s'étendant de préférence d'une extrémité avant à une extrémité arrière de la porcherie (2).

4. Installation de porcherie (1) selon la revendication 1 ou 2, dans laquelle la porcherie (2) a au moins deux ouvertures de ventilation, au moins une première ouverture de ventilation pour l'écoulement d'air dans la porcherie (2) et au moins une seconde ouverture de ventilation pour l'écoulement d'air hors de la porcherie (2), l'au moins une première ouverture étant prévue dans un sol ou au bas d'une paroi (14) ou au sommet d'une paroi (14) de la porcherie (2), et l'au moins une seconde ouverture étant prévue au sommet d'une paroi (14) ou dans le toit (5) de la porcherie (2).

5. Installation de porcherie (1) selon l'une quelconque des revendications précédentes, dans laquelle les parois (14) de la porcherie (2) sont isolées pour maintenir une certaine température à l'intérieur de la porcherie (2) pendant l'utilisation, de préférence uniquement par la chaleur émise par des porcs dans la porcherie (2).

6. Installation de porcherie (1) selon l'une quelconque des revendications précédentes, dans laquelle la porcherie (2) a des parois pliables (14) pliables le long d'une transition entre le plancher et les parois (14), éventuellement également pliables le long d'une charnière le long d'une extension des parois (14).

7. Installation de porcherie (1) selon l'une quelconque des revendications précédentes, dans laquelle le moyen de génération d'électricité comprend au moins un panneau solaire (7) et/ou au moins une batterie pour fournir de l'énergie électrique à un ou plusieurs des équipements suivants : lumière, capteurs et ordinateurs et au moins un générateur d'énergie électrique pour fournir de l'énergie électrique à un ou plusieurs des équipements suivants : lumière, machines ou batteries.

8. Installation de porcherie (1) selon l'une quelconque des revendications précédentes, dans laquelle l'enclos (3) est fixé à la porcherie (2) au niveau d'une extrémité arrière de la porcherie (2) et est pourvu d'un ou de plusieurs éléments d'enclos (4) ayant un bord inférieur dentelé ou denté venant en prise avec le sol du champ, et où le bord inférieur dentelé ou denté de l'au moins un élément d'enclos (3), lorsque l'installation de porcherie (1) est déplacée d'un emplacement dans un champ à un autre emplacement dans le champ, s'étend dans le sol et fournit un hersage du sol d'un emplacement dans le champ, où les porcs ont été actifs pendant le positionnement de l'installation de porcherie (1) dans l'emplacement dans le champ.

9. Installation de porcherie (1) selon l'une quelconque des revendications précédentes, dans laquelle le sol (13) et les parois (14) de la porcherie (2) sont fabriqués à partir d'une structure en forme de plaque des un ou plusieurs des matériaux suivants : acier, bois ou un matériau à base de polymère, et où l'enclos (3) est fabriqué à partir d'une structure en forme de treillis d'un ou de plusieurs des matériaux suivants : acier, bois ou un matériau à base de polymère.

10. Procédé de déplacement d'une installation de porcherie (1) selon l'une quelconque des revendications 1 à 9, **caractérisé en ce que** la porcherie (2) est déplacée par des moyens de déplacement externes tels qu'un tracteur tirant la porcherie (2) et/ou par des moyens de déplacement internes tels qu'un moteur entraînant les roues ou la courroie, et où l'enclos (3) se déplace du fait de son accrochage à la porcherie (2), où l'enclos (3) se déplace en étant tiré par la porcherie (2), où l'enclos (3) comprend un certain nombre d'éléments d'enclos (4) s'étendant transversalement à une direction de déplacement de l'installation de porcherie (1), et où les éléments d'enclos s'étendant transversalement (4), lorsque l'enclos (3) est tiré par la porcherie (2), nivellent la zone de champ ayant été enracinée par les porcs.
